# EUROPÄISCHE PATENTSCHRIFT

(11) **EP 0 438 669 B1**
(45) Veröffentlichungstag und Bekanntmachung des Hinweises auf die Patenterteilung: **29.03.1995**
(21) Anmeldenummer: 90122764.5
(22) Anmeldetag: 28.11.1990
(51) Int. Cl.: H04M 1/02

(54) **Fernsprechgerät mit einer an ihm schwenkbar gehalterten Klappe**
Telephone set fitted with a hinged cover
Poste téléphonique muni d'un couvercle pivotant

(30) Priorität: 25.01.1990 DE 4002178
(43) Veröffentlichungstag der Anmeldung: 31.07.1991
(73) Patentinhaber: SIEMENS AKTIENGESELLSCHAFT, 80333 München (DE)
(72) Erfinder: Kroesen, Klaus, Dipl.-Ing. (FH), W-4294 Isselburg-Anholt (DE)

(56) Entgegenhaltungen:
- EP-A- 0 281 074
- DE-A- 3 311 671
- DE-A- 3 346 470
- DE-A- 3 346 492
- DE-A- 3 442 015

## Beschreibung

Die vorliegende Erfindung beinhaltet ein Fernsprechgerät mit zumindest einer an dem Gerät schwenkbar gelagerten Klappe, wobei die Klappe an Stegen angeordnete Zapfen aufweist, die in im Fernsprechgerät vorgesehene, über Aussparungen im Gehäuse des Fernsprechgerätes zugängliche Lagerstellen eingreifen.

Fernsprechgeräte moderner Bauart besitzen schwenkbar gehalterte Klappen, wie durch die DE-A- 3 442 015 bekannt, mit denen einzelne nicht dauernd frei zugänglich sein sollende Gerätebereiche, z. B. Anzeigefelder, Kassettenlaufwerke, Batteriekästen oder dergleichen zum Schutz gegen unerwünschten Zugriff oder Verschmutzung abgedeckt werden. Zur Lagerung dieser Klappen sind üblicherweise in das Geräteinnere weisende Lageraugen für die an den Stegen der Klappe vorgesehenen Zapfen angespritzt. Zur Montage der Klappen am Fernsprechgerät müssen die die Zapfen aufweisenden Stege der Klappe deformiert werden, um die Zapfen in die am Fernsprechgerät angeordneten Lageraugen eindrücken zu können. Da die Klappen vorzugsweise aus einem durchsichtigen, zerbrechlichen Kunststoffmaterial bestehen, besteht bei diesem Vorgang leicht die Gefahr, daß die die Zapfen tragenden Stege der Klappe abgebrochen werden, was wiederum zu einer Unbrauchbarkeit der Klappe führt und somit einen hohen Ausschuß an Klappen zur Folge hat.

Der vorliegenden Erfindung liegt daher die Aufgabe zugrunde, die Lagerung der Klappe so zu gestalten, daß eine Zerstörung der die Zapfen tragenden Stege der Klappe weitgehend ausgeschlossen ist, wobei das Anbringen der Klappe am Fernsprechgerät in einfacher Weise erfolgen soll.

Diese Aufgabe wird dadurch gelöst, daß die Lagerstellen einmal durch den Zapfen konturmäßig angepaßte Randbereiche von in das Geräteinnere hineinragenden federnden Lappen und zum anderen durch diesen Randbereichen unmittelbar benachbarte und den Zapfen ebenfalls konturmäßig angepaßten Innenwandungen des Gerätegehäuses gebildet werden.

Das Vorsehen von federnden in das Geräteinnere weisenden Lappen bringt einmal den Vorteil mit sich, daß sich in diesem Fall die Lappen beim Eindrücken der die Zapfen aufweisenden Stege auseinanderspreizen, so daß die die Zapfen aufweisenden Stege nicht deformiert werden und somit die Gefahr eines Bruches dieser Bereiche so gut wie ausgeschlossen ist. Nach dem Eindrücken der die Zapfen aufweisenden Stege werden diese soweit in Richtung der Innenwandung des Gerätegehäuses verschoben, bis die Zapfen in die durch die Lappen und die Innenwandung gebildeten Lagerstellen eingreifen. Nach diesem Vorgang federn die Lappen in ihre Ausgangsstellung zurück und hintergreifen die Zapfen formschlüssig, so daß die Klappe gegen ein unerwünschtes Herausfallen gesichert ist. Die federnden Lappen lassen sich im Gegensatz zu den bekannten Lagerstellen spritztechnisch einfach herstellen und erfordern daher keine aufwendigen Spritzformen.

Ein Austauschen bzw. Entfernen der Klappe kann in diesem Fall in einfacher Weise durch Auseinanderbiegen der federnden Lappen vorgenommen werden.

Dabei können die federnden Lappen einen winkelförmig zu den die Aussparung begrenzenden Seitenwänden verlaufenden Abschnitt sowie einen parallel zu den genannten Seitenwänden verlaufenden Bereich besitzen.

Gemäß einer vorteilhaften Weiterbildung der Erfindung können die parallel zu den genannten Seitenwänden verlaufenden Bereiche der federnden Lappen zueinanderweisende halbkugelförmige Verdickungen besitzen, die im geöffneten Zustand der Klappe an den Außenwandungen der Stege der Klappe und im geschlossenen Zustand der Klappe an den Innenwandungen der genannten Stege zur Anlage gelangen. Durch diese halbkugelförmige Verdickung an den federnden Lappen wird somit die Klappe auch bei Wandbetrieb des Fernsprechgerätes in einer definierten Lage arretiert. Diese Verdickungen bringen den weiteren Vorteil mit sich, daß separate Verriegelungselemente für die Klappen entfallen können.

Die Erfindung soll im folgenden anhand eines Ausführungsbeispiels näher beschrieben werden.

Es zeigen jeweils in einer teilweise geschnittenen Seitenansicht
Figur 1 die Halterung einer Klappe eines Fernsprechgerätes in der geöffneten Stellung der Klappe,
Figur 2 die Halterung der Klappe in der geschlossenen Stellung der Klappe,
Figur 3 die Anordnung des Lappens am Gehäuseoberteil des Fernsprechgerätes.

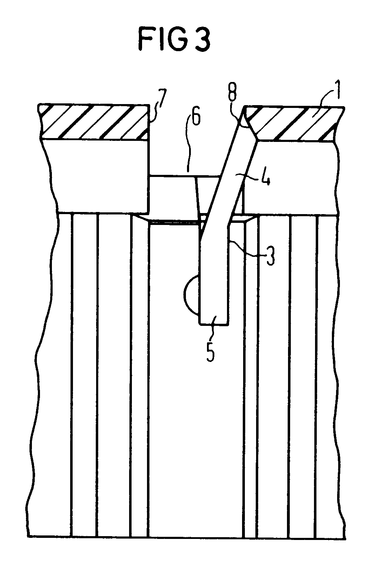

Das in den Figuren nur ausschnittsweise dargestellte Gehäuseoberteil 1 des Fernsprechgerätes 2 besitzt einen einstückig mit dem Gehäuseoberteil 1 verbundenen und in das Gehäuseinnere weisenden federnden Lappen 3. Dieser Lappen 3 verläuft, wie aus Figur 3 erkennbar ist, zunächst spitzwinklig mit seinem Abschnitt 4 zum Gehäuseinneren und anschließend parallel mit seinem Bereich 5 zu den die Aussparung 6 im Gehäuseoberteil begrenzenden Seitenwänden 7 und 8. Wie ferner der Figur 3 entnommen werden kann, besitzt der Bereich 5 des Lappens 3 eine halbkugelförmige aus ihm herausragende Verdickung 9, auf deren Bedeutung später noch eingegangen werden soll.

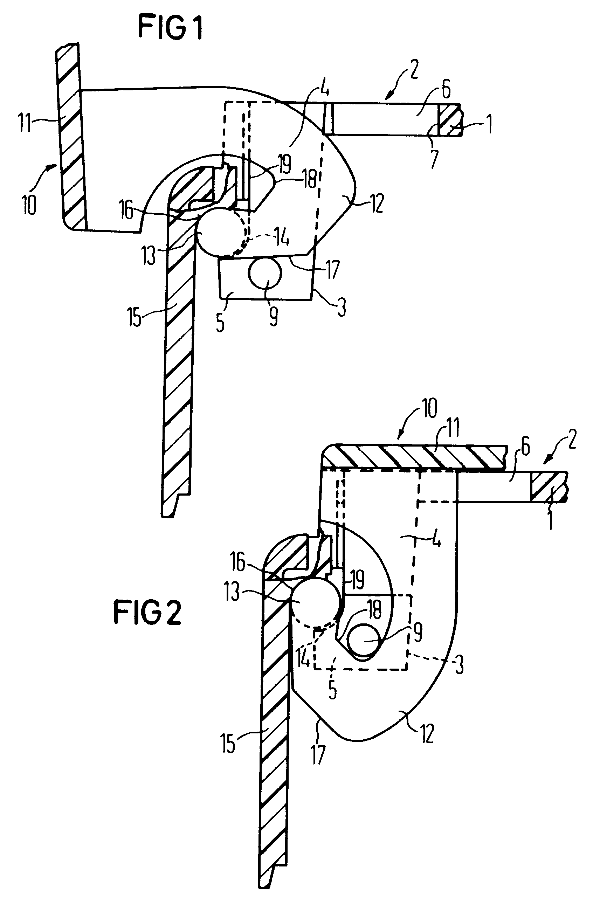

Die in den Figuren 1 und 2 gezeigte Klappe 10 besteht aus einem ebenen Abdeckbereich 11 sowie zwei jeweils an den Außenkanten dieses Bereiches 11 angeordneten und einstückig mit ihm verbundenen und der Lagerung der Klappe 10 dienenden bogenförmig gestalteten Stegen 12. Die Stege weisen jeweils einen der Lagerung und der Verschwenkung dienenden Zapfen 13 auf. Der Lagerbereich für die Zapfen 13 wird einmal von einer Ausnehmung 14 halbkreisförmigen Querschnitts an dem der Wandung 15 des Gehäuseoberteils 1 zugewandten Randbereich 19 des federnden Lappens 3, zum anderen durch die dieser Ausnehmung 14 zugewandte Innenwandung 16 des Gehäuseoberteils 1 gebildet, wobei die Innenwandung 16 in diesem Bereich eine dem Zapfen 13 angepaßte Kontur aufweist.

Zur Montage der Klappe 10 werden die Stege 12 zunächst durch die jeweilige Aussparung 6 im Gehäuseoberteil 1 eingeführt. Dabei werden die federnden Lappen 3 seitlich auseinandergespreizt. Darauf wird die Klappe 10 mit den Stegen 12 soweit in Richtung auf die Wandung 15 des Gehäuseoberteils verschoben, bis die Zapfen 13 der Stege 12 in die durch die Lappen 3 und die Innenwandung 16 des Gehäuseoberteils 1 gebildete Lagerstelle eingreifen. Dabei federn die Lappen 3 in ihre Ausgangsstellung zurück und umgreifen jeweils mit ihren Ausnehmungen 14 die Zapfen 13. Dadurch ist die Klappe 10 in ihrem Lagerbereich geführt und gehaltert und gegen ein unerwünschtes Herausfallen gesichert.

Wie weiter aus den Figuren 1 und 2 zu ersehen ist, gelangt im geöffneten Zustand der Klappe (Figur 1) jeweils die halbkugelförmige Verdickung 9 am federnden Lappen 3 an der Außenwandung 17 des die Zapfen 13 tragenden Steges 12 zur Anlage. In dieser Stellung ist die Klappe 10 auch bei hängender Stellung des Fernsprechgerätes 2 (Wandbetrieb) arretiert.

Im geschlossenen Zustand der Klappe (Figur 2) gelangt diese halbkugelförmige Verdickung 9 an der Innenwandung 18 des Steges 12 zur Anlage und verhindert somit auch bei Wandbetrieb des Fernsprechgerätes 2 ein unerwünschtes Aufspringen der Klappe 10. Aufgrund der nachgebenden federnden Lappen 3 und der kugelförmigen Ausbildung der Verdickung lassen sich beide Endstellungen ohne größeren Kraftaufwand erreichen.

## Patentansprüche

1. Fernsprechgerät (2) mit zumindest einer an dem Gerät (2) schwenkbar gelagerten Klappe (10), wobei die Klappe (10) an Stegen (12) angeordnete Zapfen (13) aufweist, die in im Fernsprechgerät (2) vorgesehene, über Aussparungen (6) im Gehäuse (1) des Fernsprechgerätes (2) zugängliche Lagerstellen eingreifen, **dadurch gekennzeichnet**, daß die Lagerstellen einmal durch den Zapfen konturmäßig angepaßte Randbereiche (19) von in das Geräteinnere hineinragenden federnden Lappen (3) und zum anderen durch diesen Randbereichen (19) unmittelbar benachbarte und den Zapfen (13) ebenfalls konturmäßig angepaßte Innenwandungen (16) des Gerätegehäuses (1) gebildet werden.

2. Fernsprechgerät nach Anspruch 1, **dadurch gekennzeichnet**, daß die federnden Lappen (3) einen winkelförmig zu den die Aussparung (6) begrenzenden Seitenwänden (7, 8) verlaufenden Abschnitt (4) sowie einen parallel zu den genannten Seitenwänden (7, 8) verlaufenden Bereich (5) besitzen.

3. Fernsprechgerät nach Anspruch 1 und 2, **dadurch gekennzeichnet**, daß die parallel zu den genannten Seitenwänden (7, 8) verlaufenden Bereiche (5) der federnden Lappen (3) zueinanderweisende halbkugelförmige Verdickungen (9) besitzen, die im geöffneten Zustand der Klappe (10) an den Außenwandungen (17) der Stege (12) der Klappe (10) und im geschlossenen Zustand der Klappe (10) an den Innenwandungen (18) der genannten Stege (12) zur Anlage gelangen.

## Claims

1. Telephone apparatus (2) having at least one flap (10) pivotably mounted on the apparatus (2), the flap (10) having pins (13) arranged on webs (12), which engage in bearings provided in the telephone apparatus (2) and accessible via recesses (6) in the housing (1) of the telephone apparatus (2), characterized in that the bearings are formed, on the one hand, by edge regions (19), matched in terms of contour to the pins, of resilient tabs (3) projecting into the inside of the apparatus and, on the other hand, by inner walls (16), directly neighbouring these edge regions (19) and likewise matched in terms of contour to the pins (13), of the apparatus housing (1).

2. Telephone apparatus according to Claim 1, characterized in that the resilient tabs (3) have a section (4) which runs in the shape of an angle to the side walls (7, 8) limiting the cutout (6) as well as a region (5) which runs parallel to the mentioned side walls (7, 8).

3. Telephone apparatus according to Claim 1 and 2, characterized in that the regions (5), running parallel to the mentioned side walls (7, 8), of the resilient tabs (3) have widened parts (9), pointing towards one another and having the shape of a hemisphere, which, in the opened state of the flap (10) come to bear on the outer walls (17) of the webs (12) of the flap (10) and, in the closed state of the flap (10), on the inner walls (18) of the mentioned webs (12).

## Revendications

1. Poste téléphonique (2) comportant au moins un couvercle (10) monté de manière à pouvoir pivoter sur l'appareil (2), le couvercle (10) possédant des tétons (13) situés sur des barrettes (12) et qui s'engagent dans des parties formant paliers qui sont prévues dans l'appareil téléphonique (2) et sont accessibles au moyen d'ouvertures (6) ménagées dans le boîtier (1) de l'appareil téléphonique (2), caractérisé par le fait que les parties formant paliers comportent, d'une part, des parties marginales (19), dont le profil est adapté à celui des tétons, de pattes élastiques (3) qui pénètrent à l'intérieur du poste, et, d'autre part, des parois intérieures (16) du boîtier (1) du poste, qui sont directement voisines de ces parties marginales (19) et ont un profil également adapté à celui des tétons (13).

2. Poste téléphonique suivant la revendication 1, caractérisé par le fait que les pattes élastiques (3) possèdent une section (4) qui s'étend, avec une forme coudée, en direction des parois latérales (7,8) qui limitent l'ouverture (6), ainsi qu'une partie (5), qui s'étend parallèlement auxdites parois latérales (7,8).

3. Poste téléphonique suivant les revendications 1 et 2, caractérisé par le fait que les parties (5), qui sont parallèles auxdites parois latérales (7,8), des pattes élastiques (3), possèdent des épaississements de forme hémisphérique (9), qui se font face et qui, lorsque le couvercle (10) est ouvert, viennent s'appliquer contre les parois extérieures (17) des barrettes (12) du couvercle (10) et qui, lorsque le couvercle (10) est fermé, viennent s'appliquer contre les parois intérieures (18) desdites barrettes (12).
